Europäisches Patentamt

European Patent Office

Office européen des brevets

(11) Numéro de publication: **0 044 231**

**B1**

(12) **FASCICULE DE BREVET EUROPEEN**

(45) Date de publication du fascicule du brevet: **19.09.84**

(51) Int. Cl.³: **F 16 L 27/10, E 21 B 17/08**

(21) Numéro de dépôt: **81400947.8**

(22) Date de dépôt: **15.06.81**

(54) Joint flexible pour le raccordement de deux conduites.

(30) Priorité: **11.07.80 FR 8015454**

(43) Date de publication de la demande:
**20.01.82 Bulletin 82/03**

(45) Mention de la délivrance du brevet:
**19.09.84 Bulletin 84/38**

(84) Etats contractants désignés:
**DE FR GB IT**

(56) Documents cités:
**FR-A-2 072 343**
**FR-A-2 389 063**
**GB-A-1 189 052**

(73) Titulaire: **COMPAGNIE GENERALE POUR LES DEVELOPPEMENTS OPERATIONNELS DES RICHESSES SOUS-MARINES "C.G. DORIS"**
**58, Rue du Dessous des Berges**
**F-75013 Paris (FR)**

(72) Inventeur: **Lamy, Jacques Edouard**
**16, Rue d'Estienne d'Orves**
**F-92260 Fontenay-aux-Roses (FR)**
Inventeur: **Michel, Dominique**
**42, Rue d'Artois**
**F-75008 Paris (FR)**
Inventeur: **Serrano, Francisco de Asis Manuel**
**26, Rue Henri Tariel**
**F-92130 Issy-les-Moulineaux (FR)**

(74) Mandataire: **De Boisse, Louis**
**37, Avenue Franklin D. Roosevelt**
**F-75008 Paris (FR)**

EP 0 044 231 B1

## Description

L'invention concerne un joint flexible pour le raccordement de deux conduites correspondant au préambule de la revendication 1 (FR—A—2.072.343).

Dans les forages pétroliers en mer, le tube d'extension du forage ou "riser" est placé entre l'engin de forage en surface et le bloc obturateur de sécurité placé sur le puits. Dans ce tube riser passe le train de tiges et remonte la boue de forage. De ce fait, le riser doit avoir un diamètre suffisamment grand pour permettre le passage du trépan et des différents dispositifs utilisés dans le forage et une épaisseur susceptible de résister à des pressions qui peuvent atteindre plusieurs centaines de bars. Ces impératifs conduisent à l'utilisation d'un tube de grande rigidité. Lorsque le forage est conduit à partir d'une plateforme flottante ou d'un navire, ces derniers subissent des variations de position qui doivent être compensées en permanence et le tube "riser" doi pouvoir suivre les déplacements sans subir de contraintes importantes. Les mouvements verticaux de la plateforme de forage sont compensés par un dispositif de suspension du tube "riser" qui maintient celui-ci en traction pour lui éviter tout risque de flambement en compression. Les mouvements horizontaux du support flottant entraînent le tube qui balaie un volume conique, dont l'angle dépend de la précision du positionnement. Généralement, le tube est muni, à sa partie inférieure, d'un joint flexible qui permet son oscillation et qui résiste à la force de traction engendrée par le dispositif de suspension.

L'exploitation de plateforms mobiles, de navires de forage et de plateformes oscillantes, a permis de constater que, bien qu'un dispositif de suspension du tube riser soit prévu, il se produit des efforts de compression qui sont supportés par le joint flexible.

Le FR—A—2072.343 décrit un système de joint flexible comportant un boîtier cylindro-conique raccordé par soudure à l'extrémité supérieure de la colonne inférieure de tuyaux entourant un boîtier intérieur cylindrique fixé par soudure à l'extrémité inférieure de la colonne supérieure de tuyaux. Le boîtier intérieur comporte sur sa circonférence une bride contre laquelle viennent s'appuyer de part et d'autre deux ensembles d'étanchéité. Chaque ensemble est constitué d'un élément annulaire rigide intérieur ayant une surface sphérique extérieure sur laquelle sont disposées des couches alternées d'élastomère et de métal en forme de segments sphériques creux. Un segment de renfort extérieur est prévu sur la couche la plus extérieure et présente une paroi conique.

La paroi conique de l'un des ensembles est susceptible de coopérer avec la partie conique du boîtier extérieur et celle de l'autre ensemble avec une paroi conique d'un collier de retenue fixé sur l'ouverture du boîtier extérieur. Les ensembles flexibles sont disposés de part et d'autre de centre d'oscillation, les surfaces concaves des segments sphériques étant dirigées vers ce centre et concentriques par rapport à lui.

Les éléments annulaires rigides intérieurs présentent deux faces: une face cylindrique s'appuyant contre la surface cylindrique du boîtier intérieur et une face annulaire, perpendiculaire à la face cylindrique, s'appuyant contre les faces de la bride annulaire. Les faces cylindriques du boîtier intérieur et de l'élément rigide intérieur de chacun des ensembles sont séparées par un élément de cisaillement en matériau élastique. Eventuellement des trous font communiquer l'espace compris entre le boîtier extérieur et les surfaces inclinées des éléments de flexion, et le passage central. Le collier de retenue est séparé de l'ouverture du boîtier extérieur par un espace dont on peut régler la distance et qui permet de régler la charge de compression qui s'exerce sur les ensembles flexibles.

Le joint ci-dessus décrit à l'avantage d'être compact et de permettre un débattement relativement important. Toutefois les ensembles de flexion et en particulier celui disposé en contact du fluide circulant à l'intérieur des tubes doit présenter une section importante pour résister à la pression interne et également aux efforts de compression transmis par le tronçon supérieur de tubes. Si la chambre comprise entre les deux ensembles et le boîtier extérieur communique avec le canal central, l'ensemble supérieur travaillera alors en traction et subira la pression du fluide intérieur, ce qui diminuera sa tenue dans le temps. La compression initiale appliquée sur les ensembles sera difficile à déterminer car les éléments rigides des éléments flexibles s'appuient sur des surfaces coniques et les surfaces des armatures sont séparées de la surface cylindrique du boîtier intérieur par des éléments de cisaillement élastiques L'engagement conique des surfaces ne permet pas un démontage aisé du joint qui est d'ailleurs soudé aux tubes. Les parties en élastomère sont soumises à la température et à l'abrasion du fluide circulant dans le tube et ont une durée de vie limitée.

L'invention propose un joint dans lequel les fonctions étanchéité et butée des éléments flexibles sont dissociées.

Le réglage de la précompression des éléments élastiques est assuré avec précision grâce aux surfaces sur lesquels ils s'appuient et permet l'obtention d'un angle d'oscillation maximal. La durée de vie du joint est augmentée par refroidissement efficace des ensembles flexbles et une protection du joint d'étanchéité contre l'abrasion.

Le joint flexible, selon l'invention, permet d'obtenir un angle de débattement ou d'oscillation important (±10°) pour un encombrement réduit qui peut être mesuré par le rapport entre le diamètre extérieur hors tout du joint et le diamètre intérieur utile du passage raccordant les deux conduites.

L'invention telle qu'elle est caractérisée dans la revendication 1 résout lesdits problèmes et apporte lesdits avantages.

Des modes particuliers de réalisation de l'invention apparaissent dans les revendications dépendantes.

Les explications et les figures données ci-après à titre d'exemple permettront de comprendre comment l'invention peut être réalisée.

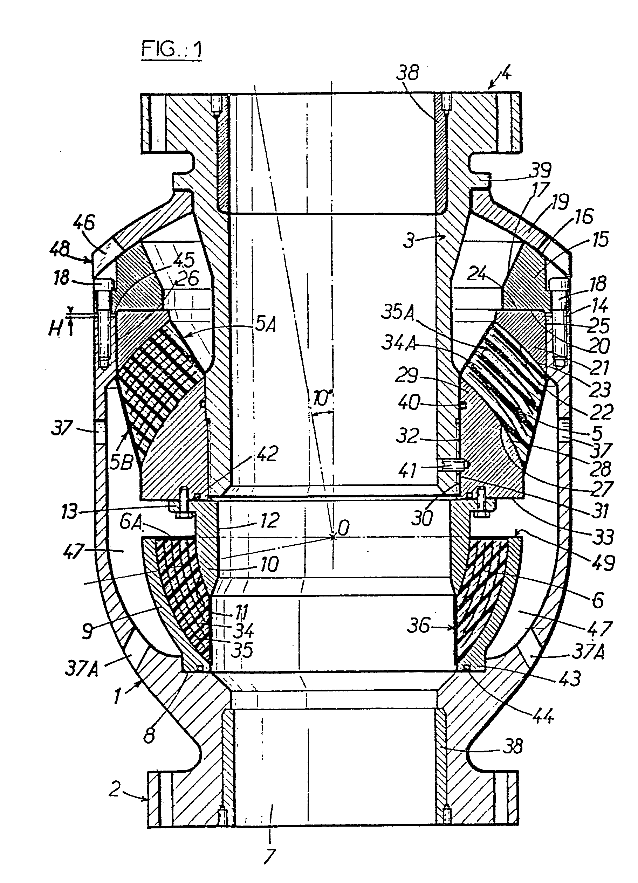

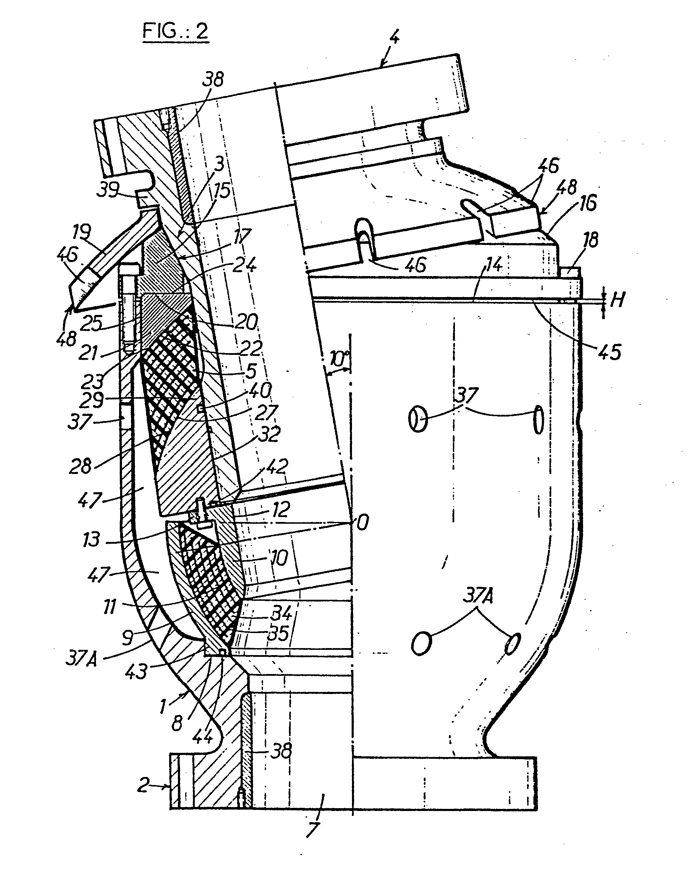

La figure 1 représente, en coupe, une vue du joint flexible selon l'invention; la figure 2 est une vue, en demi-coupe, du même joint, fléchi.

La figure 1 montre un joint flexible, selon l'invention, pour le raccordement de deux conduites. Le joint comporte une pièce en forme de cuvette 1, susceptible d'être raccordée par la bride 2 à une première conduite, et un pièce tubulaire 3 susceptible d'être raccordée par la bride 4 à la deuxième conduite. Cette pièce 3 est coaxiale à la pièce en cuvette 1 et est disposée en partie à l'intérieur de celle-ci. Deux anneaux sphériques flexibles 5 et 6 dénommés ci-après respectivement butée flexible et joint d'étanchéité sont disposés entre la pièce tubulaire et la pièce en cuvette.

La pièce en forme de cuvette 1 est percée axialement par un orifice 7 dont le diamètre est égal à celui du diamètre intérieur des conduits à raccorder. L'intérieur de la cuvette porte, près de l'orifice 7, un chambrage cylindrique 8 dans lequel vient se placer une coquille annulaire sphérique 9 solidaire de la face convexe du joint d'étanchéité 6. La face concave de ce joint est solidaire de la surface extérieure 11 sphérique d'une armature annulaire 10 dont la surface latérale intérieure 12 délimite un passage, coaxial à la pièce tubulaire, de diamètre supérieur à celui de l'orifice 7. L'armature 10 porte sur l'un de ses bords, une collerette 13 dont le rôle sera précisé ultérieurement.

L'ouverture 14 de la pièce en cuvette 1 reçoit une bride 15 dont la surface supérieure 16 est sphérique (avec centre en O) et dont au moins une partie de la surface intérieure 17 est conique. Cette bride est fixée sur l'ouverture 14 par des moyens en soi connus tels que des boulons 18. La surface sphérique 16 de la bride coopère avec une collerette sphérique 19 solidaire de la pièce tubulaire 3. Ces deux pièces 15 et 19 forment un appui sphérique permettant les mouvements d'oscillation de la pièce tubulaire 3 dans la pièce en cuvette 1, et évitant les mouvements relatifs de la pièce tubulaire et de la pièce en cuvette pour des efforts de compression axiale des conduites.

Une face inférieure 20 de la bride 15 est conformée et prévue pour recevoir l'armature 21 de la butée flexible 5. Cette armature 21 est une pièce de révolution dont la section a la forme d'un triangle rectangle à hypothénuse concave; les dimensions et la courbure de ladite pièce de révolution sont égales à celles de la surface convexe sphérique 22 de la butée flexible 5. Il en est de même pour l'armature 29 en forme de pièce de révolution dont la face convexe 28 est de dimensions et courbure égales à celles du côté concave 27 de la butée flexible 5. La face latérale cylindrique 30 de l'armature 29 a un diamètre correspondant au diamètre extérieur 31 de la pièce tubulaire 3 avec laquelle elle coopère par au moins une partie d'extrémité filetée 32. La face annulaire 33 de l'armature 29 porte des moyens de fixation de la collerette 13 de l'armature annulaire 10 du joint d'étanchéité 6.

La position relative des différentes pièces constituant le joint flexible et leur forme ont été choisies de manière que le centre O d'oscillation de l'ensemble soit placé entre les anneaux sphériques flexibles dénommés butée flexible 5 et joint d'étanchéité 6, dans le plan défini par le bord libre 49 de la coquille 9. Le centre O est également le centre des rayons déterminant les différentes surfaces sphériques de la butée, du joint et de leurs armatures ainsi qui de l'appui formé par la bride 15 et la collerette sphérique 19.

Les anneaux sphériques flexibles 5 et 6 se trouvent donc de part et d'autre du plan contenant le centre O, précédemment défini, leur concavité étant tournée vers le centre O. Cette disposition permet d'obtenir un débattement important de la pièce tubulaire 3 par rapport à la pièce en cuvette 1, l'espace annulaire entre ces deux pièces étant réduit pratiquement à l'encombrement des anneaux sphériques flexibles 5 et 6 tant en hauteur qu'en diamètre.

L'angle d'inclinaison obtenu par cet arrangement est de l'ordre de ±10° par rapport à la verticale, limité par la surface 17 de la bride 15.

Le corps élastique des anneaux sphériques flexibles est constitué d'un empilement de couches d'élastomère 34 et de rondelles sphériques métalliques 35 en forme de zone sphérique. Les rondelles sphériques sont obtenues par usinage d'ébauches en acier selon un rayon égal à la distance entre le centre O et la position de la rondelle dans l'empilement. Chaque rondelle métallique présente donc un rayon de courbure différent, mais une épaisseur constante. L'empilage est obtenu de manière connue par vulcanisation de l'ensemble rondelles métalliques—couches d'élastomère. L'élastomère est du caoutchouc naturel dont les faces externes, 5A et 5B pour la butée et 6A pour le joint, sont recouvertes d'une couche vulcanisée de caoutchouc chloré ou tout autre élastomère résistant aux hydrocarbures et au milieu marin ambiant. Le chant des rondelles métalliques et les couches de caoutchouc naturels sont ainsi mis à l'abri de l'agression du milieu marin ambiant qui peut contenir des traces d'hydrocarbures.

La surface interne du joint d'étanchéité 6 en contact avec la boue de forage est recouverte par vulcanisation d'un manchon 36 en caoutchouc synthétique résistant à l'abrasion, aux produits pétroliers et chimiques et à la température élevée de la boue de forage qui à cet endroit peut dépasser 100°C.

Les armatures de la butée et du joint sont également fixées aux corpos élastiques de ces pièces par vulcanisation.

Cette forme de réalisation permet une parfaite flexibilité des joints tout en leur conservant une grande résistance à la compression et au cisaillement. Toutefois, leur résistance à des forces de traction est limitée.

De telles forces peuvent apparaître dans certains cas de dérive momentanée du navire ou de la plateforme flottante de forage. Le tube "riser" fixé à la pièce tubulaire 3 du joint flexible subit un brusque effort axial dirigé vers le bas qui a pour effet de produire une compression de la conduite. Du fait de la position du joint 5 par rapport au centre O, il est alors soumis à des efforts de traction. L'éventulaité d'une mise en traction de la butée 5 accompagnée d'une mise en compression du joint 6 est éliminée par l'appui sphérique, constituée des pièces 15 et 19, qui reprend et transmet directement les efforts de compression de la pièce tubulaire 3 à la pièce en forme de cuvette 1 sans passer par les anneaux sphériques flexibles 5 et 6.

L'appui sphérique, plongé entièrement dans le milieu marin, et ne fonctionnant qu'épisodiquement sous charge, présentera une usure négligeable dans le temps et n'influencera pas la flexibilité de l'ensemble.

Les bords de la collerette sphérique 19 sont chanfreinés en 48 afin d'éviter qu'ils ne dépassent du pourtour extérieur de la cuvette 1.

Le joint d'étanchéité 6, dont la forme et la structure ont été prévues pour assurer uniquement l'étanchéité entre la boue de forage circulant à l'intérieur des conduites et le milieu marin extérieur pénétrant librement dans l'espace 47 de la pièce en cuvette par les orifices 37, est parfaitement protégé d'une compression accidentelle par cet appui sphérique. Sans appui, le joint subirait, sous l'action d'une force de compression axiale, une extrusion qui serait préjudiciable à sa longévité. En effet, le joint d'étanchéité doit supporter une pression intérieure qui, en marche normale, peut atteindre plusieurs centaines de bars. Ces pressions sont d'autant mieux contrôlées que les surfaces qui y sont soumises sont plus petites et, par conséquent, le diamètre inférieur du joint est le plus faible possible. Ce diamètre est imposé par le diamètre de passage libre à respecter. L'épaisseur du joint dépend de son diamètre et de la pression de fonctionnement. A pressions égales, il est d'autant moins épais que son diamètre est plus faible.

La disposition des pièces constituant ce joint flexible selon l'invention est telle que la diamètre intérieur du joint d'étanchéité est pratiquement égal au diamètre du passage libre de la conduite. En outre, la réalisation concentrique de l'empilement constituant le joint lui confère une bonne tenue à la pression extérieure dans le cas où l'intérieur des conduites serait en dépression par rapport au milieu ambiant. Cette pression peut exister, par exemple, dans le cas où le joint flexible est intercalé entre le tube "riser" et le bloc obturateur de tête de puits, si celui-ci est descendu à grande profondeur avec ses vannes fermées, ou dans le cas où, en cours de forage à l'eau, il se produit une arrivée de gaz de faible importance mais suffisante pour alléger la colonne de boue par mise en émulsion de celle-ci.

Le passage du joint d'étanchéité 6, de par sa réalisation, ne présente pas après déflexion d'irrégularité sensible où peuvent venir s'accrocher les outils de forage ou les excroissances du train de tiges.

Les entrées du joint flexible sont munies de façon connue de bagues d'usure 38 qui y sont fixées de manière connue.

Le problème évoqué plus haut de la tenue du joint d'étanchéité à la température très élevée des boues de forage est résolu par circulation d'eau, par thermosiphon, dans l'espace 47 autoure du joint 6.

La cuvette 1 comporte des ouvertures 37 et 37A disposées et orientées convenablement par exemple selon une couronne supérieure et une couronne inférieure, qui ont un double rôle: éviter la mise en pression de la tasse 1 et de la butée 5 en cas de fuite du joint 6 et permettre l'entrée et sortie d'eau dans l'espace 47. L'eau pénètre par les ouvertures 37A de la couronne inférieure, s'échauffe au contact de la coquille 9 et de la surface 6a du joint 6 subissant ainsi une perte de poids spécifique qui la fait ressortir par les ouvertures 37 de la couronne supérieure. Il s'établit ainsi une circulation d'eau continue autoure du joint.

Cette circulation d'eau assure un refroidissement efficace du joint.

L'assemblage des différentes pièces constituant le joint flexible est fait dans l'ordre suivant:

——on introduit sur la pièce tubulaire 3 la collerette sphérique 19 qui vient buter contre la collerette annulaire 39 de la pièce tubulaire 3,

——on place ensuite la bride 15, puis le joint 5 dont l'armature 21 vient buter contre la bride après vissage de l'armature 29 sur l'extrémité filetée 32 de la pièce tubulaire 3, un joint torique 40 assurant l'étanchéité entre l'armature et la pièce tubulaire, et blocage par la vis pointeau 41,

——on boulonne la collerette 13 de l'armature 10 du joint 6 sur l'armature 29 du joint 5 après interposition d'un joint torique 42.

L'ensemble ainsi constitué est introduit dans la pièce en cuvette 1 de manière que la partie annulaire 43 de la coquille 9 pénètre dans le chambrage cylindrique 8 du fond du la pièce en cuvette où l'étanchéité est assurée par un joint torique 44.

La hauteur comprise entre la portée 45 de la bride 15, prévue pour coopérer avec le bord annulaire 14 de l'ouverture cylindrique de la pièce en cuvette, et la portée 43 de la coquille sphérique 9 du joint 6, est supérieure à celle comprise entre le fond du chambrage 8 et le bord de l'ouverture cylindrique de la pièce en cuvette. Lorsque la pièce tubulaire est en place dans la pièce en cuvette, la portée 45 de la bride 15 et le bord 14 de la pièce en cuvette présentent un écartement H dont la hauteur peut être réglée par les boulons 18 qui sont mis en place au travers des encoches 46. Le serrage plus au moins poussé des boulons 18 permet d'appliquer sur la butée 5 et le joint 6 la précontrainte axiale désirée.

Selon un exemple de réalisation conforme à la description de l'invention, les conduites à raccorder ont un diamètre approximatif de 527 mm (20" 3/4), le diamètre hors tout de la pièce en cuvette est de 1219 mm (48"), le rapport entre le diamètre extérieur et le passage utile du joint est donc d'environ 2, 3, alors que les joints actuellement sur le marché présentent un rapport d'au moins 3.

La différence de pression que le joint est susceptible de supporter tant de l'intérieur vers l'extérieur que l'inverse est de l'ordre de 300 bars (environ 4250 p.s.i.).

L'angle d'oscillation est de ±10° par rapport à la verticale.

## Revendications

1. Joint flexible pour le raccordement de deux conduites, ledit joint comportants

— une pièce en forme de cuvette (1), dont l'ouverture cylindrique présente un bord annulaire (14) sur lequel une bride (15) est fixée, la pièce en cuvette (1) étant raccordable a une première conduite,
— une pièce tubulaire (3) raccordable à une seconde conduite, ladite piece tubulaire (3) etant coaxiale à la pièce en cuvette (1) et disposée en partie à l'intérieur de celle-ci,
— un premier et deuxième anneaux sphériques flexibles (5, 6), constitués d'un empilage alterné de couches d'élastomère (34, 34A), et de rondelles sphériques métalliques (35, 35A), disposées entre la pièce en cuvette (1) et la pièce tubulaire (3), les deux anneaux sphériques flexibles (5, 6) sont relies l'un à l'autre et sont disposés du part et d'autre du centre d'oscillation (O) du joint, les surfaces concaves des anneaux flexibles (5, 6) étant dirigées vers le centre d'oscillation et étant concentriques par rapport à ce centre,
— quatre armatures annulairies rigides (21, 29, 10, 9) supportant deux à deux chacun des deux anneaux flexibles (5, 6),

caractérisé en ce que la bride (15) présente une surface supérieure sphérique (16) conformée pour coopérer avec la surface sphérique complémantaire d'une collerette sphérique (19) maintenue par la pièce tubulaire (3) et une surface inférieure plane, annulaire (20) maintenant une première armature (21) du premier anneau sphérique flexible (5), en ce que la deuxième armature (29) dudit premier anneau flexible (5) porte sur sa partie latérale cylindrique intérieure (30) un filetage correspondant de la partie latérale extérieure d'extrémité de la pièce tubulaire (3), en ce que ladite deuxième armature (29) porte des moyens de fixation pour une troisième armature annulaire convexe (10) du deuxième anneau sphérique flexible (6), en ce que la face convexe dudit deuxième anneau flexible (6) est fixée sur la face intérieure concave d'une coquille annulaires sphérique (9) formant la quatriéme armature dont une partie est puise dans un chambrage cylindrique de la pièce en cuvette (1), et en ce que la troisième armature annulaire convexe (10) délimite un passage coaxial à la pièce tubulaire (3) at a un diamètre supérieur à celui de la pièce tubulaire (3).

2. Joint flexible selon la revendication 1, caractérisé en ce que la surface de l'anneau sphérique flexible (6) en contact avec la boue de forage est recouverte d'un manchon (36) en caoutchouc synthétique.

3. Joint flexible selon la revendication 1, caractérisé en ce que les surfaces (5A, 5B, 6A) des anneaux sphériques flexibles sont recouvertes d'une couche d'élastomère resistant aux hydrocarbures et au milieu marin.

4. Joint flexible selon l'une des revendications précédentes, caractérisé en ce que la pièce en forme de cuvette (1) porte selon au moins une couronne supérieure et une couronne inférieure des ouvertures (37, 37A) pour la circulation de l'eau par thermosiphon dans l'espace intérieur (47) de la pièce en forme de cuvette.

## Patentansprüche

1. Elastische Rohrverbindung für zwei Rohre, mit einem vasenförmigen Teil (1), dessen zylindrisch ausgebildete Öffnung einen ringförmigen Rand (14) aufweist, auf dem ein Flansch (15) befestigt ist, wobei der vasenförmige Teil (1) mit einem ersten Rohr verbindbar ist, einem rohrförmigen Teil (3), der mit einem zweiten Rohr verbindbar ist und der koaxial zu dem vasenförmigen Teil (1) ist und teilweise innerhalb desselben liegt, einem ersten elastischen sphaïrischen Ring (5) und einem zweiten elastischen spärischen Ring (6), wobei die spärischen Ringe (5, 6) durch Stapel gebildet sind, die abwechselnd aus Elastomer-Lagen (34, 34A) und sphärischen Metallscheiben (35, 35A) aufgebaut sind und die zwischen dem vasenförmigen Teil (1) und dem rohrförmigen Teil (3) angeordnet sind, und wobei die beiden elastischen sphärischen Ringe (5, 6) miteinander verbunden und beiderseits des Drehzentrums (O) des Gelenkes derart angeordnet sind, daß die konkaven Flächen der elastischen Ringe (5, 6) zum Drehzentrum hin gerichtet und konzentrisch zu diesem Zentrum sind und mit vier starren Stützringen (21, 29, 10, 9), die die beiden elastischen Ringe (5, 6) paarweise stützen, dadurch gekennzeichnet, daß der Flansch (15) eine obere sphärische Fläche (16) aufweist, die zum Zusammenwirken mit einer komplementären sphärischen Fläche einer sphärischen Deckplatte (19) ausgebildet ist, die von dem rohrförmigen Teil (3) gehalten ist, sowie eine untere ebene ringförmige Fläche (20), die einen ersten Stützring (21) des ersten sphrärischen elastischen Ringes (5) hält, daß der zweite Stützring (29) des ersten elastischen Ringes (5) an einem unteren seitlichen zylindrischen Teil (30) ein Gewinde trägt, das mit dem seitlichen äußeren Endteil des rohrförmigen Teiles (3) korrespondiert, daß der genannte zweite Stützring (29) Befestigungsmittel für einen dritten ringförmigen konkaven Stützring (10) des zweiten sphärischen elastischen Ringes (6) trägt, daß die konkave Fläche des genannten zweiten elastischen Ringes (6) auf der konkaven Innenseite einer sphärischen ringförmigen Schale (9) befestigt ist, die den vierten Stützring bildet, von dem ein Teil in einer zylindrischen Ausnehmung (8) des vasenförmigen Teiles (1) aufgenommen ist und daß der dritte ringförmige konkave Stützring (10) einen Durchlaß begrenzt, der koaxial zu dem rohrförmigen Teil (3) ist und einen Durchmesser aufweist, der größer ist als der Durchmesser des rohrförmigen Teiles (3).

2. Elastische Rohrverbindung nach Anspruch 1, dadurch gekennzeichnet, daß die Fläche des sphärischen elastischen Ringes (6), die mit dem Schlamm aus der Bohrung in Berührung kommt, mit einem Überzug (36) aus zynthetischem Gummi überzogen ist.

3. Elastische Rohrverbindung nach Anspruch 1, dadurch gekennzeichnet, daß die Oberflächen (5A, 5B, 6A) der sphärischen elastischen Ringe mit einer Lage aus elastomerem Material überzogen sind, das gegenüber Kohlenwasserstoffen und gegenüber Meerwasser widerstandsfähig ist.

4. Elastische Rohrverbindung nach einem der vorhergehenden Ansprüche, dadurch gekennzeichnet, daß der vasenförmige Teil (1) längs wenigstens eines oberen und eines unteren Lochkranzes angeordnete Löcher (73, 37A) aufweist für die Durchströmung des inneren Raumes (47) des vasenförmigen Teiles mit Wasser aufgrund thermischer Strömung.

## Claims

1. A flexible joint for the connection of two pipes the said joint comprising:

— a part in the form of a bowl (1) whose cylindrical opening has an annular edge (14) on which a flange (15) is fixed, the bowl part (1) being connectable to a first pipe,

— a tubular part (3) connectable to a second pipe, the said tubular part (3) being co-axial with the bowl part (1) and partly disposed towards the interior of the latter,

— a first and second flexible spherical coupling (5, 6) formed by alternate stacking of elastomer layers (34, 34A) and metallic spherical washers (35, 35A) disposed between the bowl part (1) and the tubular part (3), the two flexible spherical couplings (5, 6) are joined one to the other and are disposed either side of the centre of oscillation (O) of the joint, the concave surfaces of the flexible couplings (5, 6) being directed towards the centre of oscillation and being concentric in relation to this centre,

— four rigid annular carriers (21, 29, 10, 9) supporting, in pairs, each of the two flexible links (5, 6),

characterised in that the flange (15) has a spherical upper surface (16) formed so as to cooperate with the complementary spherical surface of a spherical flange (19) held by the tubular part (3) and an annular, flat lower surface (20) holding a first carrier (21) of the first flexible spherical coupling (5), in that the second carrier (29) of the said first flexible coupling (5) carries on its interior cylindrical lateral portion (30) a thread corresponding to the exterior lateral portion of the extremity of the tubular part (3), in that the said second carrier (29) carries fixing means for a third convex annular carrier (10) of the second flexible spherical coupling (6), in that the convex face of the said second flexible coupling (6) is fixed on the concave interior face of a spherical annular shell (9) forming the fourth carrier of which one part is taken into a cylindrical housing (8) of the bowl part (1) and in that the third convex annular carrier (10) defines a co-axial passage to the tubular part (3) and has a greater diameter than that of the tubular part (3).

2. A flexible joint according to claim 1 characterised in that the surface of the flexible, spherical coupling (6) in contact with the boring/drilling mud is covered by a sleeve (36) of synthetic rubber.

3. A flexible joint according to claim 1 characterised in that the surfaces (5A, 5B, 6A) of the flexible spherical couplings are covered by a layer of elastomer which is resistant to hydrocarbons and marine conditions.

4. A flexible joint according to any of the preceding claims, characterised in that the bowl part (1) has, on at least one upper peripheral portion and one lower peripheral portion, openings (37, 37A) for the circulation of water by thermosyphon in the interior space (47) of the bowl part.

FIG.: 1

FIG.: 2